# EUROPEAN PATENT SPECIFICATION

(11) **EP 2 571 738 B1**
(45) Date of publication and mention of the grant of the patent: **17.06.2015**
(21) Application number: 11725993.7
(22) Date of filing: 19.05.2011
(51) Int. Cl.: B60V 3/06

(54) **Hovercraft designed for carrying out plant protection treatment operations on water and marshy terrain, especially national and landscape parks**
LUFTKISSENFAHRZEUG, KONZIPIERT FÜR DIE DURCHFÜHRUNG VON PFLANZENSCHUTZOPERATIONEN IN WASSER UND SCHLAMMIGEN BEREICHEN, INSBESONDERE IN NATIONAL- ODER LANDSCHAFTSPARKS
AÉROGLISSEUR CONÇU POUR RÉALISER DES OPÉRATIONS DE PRÉSERVATION DES PLANTES SUR DES ZONES AQUATIQUES ET BOUEUSES, EN PARTICULIER DANS DES PARCS DE PAYSAGES NATURELS ET NATIONAUX

(30) Priority: 21.05.2010 PL 39129210
(43) Date of publication of application: 27.03.2013
(73) Proprietor: PRZEMYSLOWY INSTYTUT MASZYN ROLNICZYCH, 60-963 Poznan (PL)
(72) Inventor: DUBOWSKI, Adam, PL60-681 Poznan (PL); GRZELAK, Janusz, PL62-060 Steszew (PL); PAWLOWSKI, Tadeusz, PL60-277 Poznan (PL); RAKOWICZ, Aleksander, PL61-657 Poznan (PL); WEYMANN, Sylwester, PL61/713 Poznan (PL); ZEMBROWSKI, Krzysztof, PL60-406 Poznan (PL)
(74) Representative: Kowalkiewicz, Wladyslaw
(86) International application number: PCT/PL2011/000053
(87) International publication number: WO 2011/145962

(56) References cited:
- DE-A1- 2 354 049
- GB-A- 2 170 158
- US-A- 4 209 400

## Description

The object of the invention is hovercraft designed for carrying out protective treatment operations on water and marshy terrain, especially national and landscape parks.

Known hovercraft are usually large size vehicles designed for special tasks carried out by armed forces, duty customs units, maritime rescue units and fire brigades. There are also known hovercraft which are relatively small (e.g. described in the patent application P363130) and used for recreational and sport purposes, transporting postal shipments and patrolling water areas as aquatic emergency units. All these structures are designed to move with high speeds of 80 km/h and higher. There are also hovercraft which are used to carry out chemical spraying services on rice fields and hovercraft taking the form of usually huge stationary platforms which are used to perform works related to the extraction of crude oil or natural gas.

Structures are also known of professional vehicle-based tool carriers which are built on the Unimog vehicle chassis units, equipped with attachable tool or machine modules. These vehicles are adapted to move on roadsides, that is, in rather heavy terrain conditions; however, they are not adapted to move on water and marshy terrain. Caterpillar vehicles dedicated for similar purposes, equipped with various types of exchangeable tool modules or devices, are designed for working on heavy water and marshy terrain. These vehicles happen to overturn after driving side wheels into a bigger depression of the terrain or onto an invisible fault situated under the water table. A disadvantage of both the wheeled and the caterpillar vehicles is the adverse effect that their tires or caterpillars have on the ground. On boggy or water-soaked terrain, wheel tires usually form deep ruts whereas caterpillar tracks destroy the surface layer of the terrain, especially while making turns, thus adversely affecting the natural environment - they mechanically destroy mosses, lichen etc.

An oil spill clean method and apparatus is known from the patent description no US 4209400. A method to recover oil from the surface of oil contaminated water which comprises partially surrounding a hovercraft with a floating oil barrier, said hovercraft being fitted with means to direct air onto the oil contaminated water to sweep it within said barrier, moving the hovercraft into said oil contaminated water and collecting oil gathered within the barrier behind the hovercraft through a suction line from which the oil is conducted to storage tanks aboard the craft.

A mine sweeping vehicle is known from the patent description no GB2170158A.. A hovercraft having support means adapted to support a detonation device such as a flail at a safe distance therefrom, the support means comprising a self-containing skirt operable to contain an air flow from a compensator fan at a pressure above the normal operating pressure of the hovercraft, the arrangement being such that air from the fan compensates the leverage effect of the detonation device to prevent it from becoming tilted with respect to the hovercraft.

A bagger is known from the patent description no DE 2354049. Bagger characterized in devices for generating at least one flow medium pressure cushion underneath it, carrying the excavator and in devices to maintain the pressure cushion.

From the patent description no US 3804197, which shows all the features of the preamble of claim 1, there is also known a ground effect machine having a frame movable along a bearing surface with the interposition of a pressure fluid cushion of polygonal planshape having a rectilinear front side transverse to the direction of motion of said machine, comprising: adjustable cushion seal means defining said front side and comprising an angular-shaped wall having two generally planar wall portions interconnected through a generally dihedral edge, one of said wall portions projecting forwardly and at obliquity from an edge thereof attached to said frame towards said bearing surface up to said dihedral edge and the other of said wall portions projecting rearwardly and at opposite obliquity from said dihedral edge toward said bearing surface up to a free daylight-clearance bounding edge, whereby said dihedral edge occupies a foremost location on said angular-shaped wall and forms a leading edge thereof extending transversely with respect to said direction of motion, and dynamic pressure sensitive means responsive to the air speed of said machine and interposed between said frame and said leading edge, for urging said leading edge towards said frame upon an increase in dynamic pressure being sensed by said pressure means, and conversely.

A dredger is known from the patent description no GB1415685. A dredger provided with means for forming at least one cushion of pressurised fluid beneath the dredger so as to support it above a surface, and further provided with means for containing said cushion.

From the patent description no PL 142510, there is also known a rake and rotor type ditch desludger. The desludger, fixed to a tractor support frame, preferably a tractor with a reversed drive direction, has bolt hitches, rigging screws and hydraulic actuators equipped with a rake unit or a rotor unit, is characterised in that it has a frame for mounting working units which is made in the shape of a saddle and the slope of which is connected to the tractor support frame by means of two bolt hitches and at the top by means of two rigging screws whereby the frame has two upper sockets to which a double strip boom is fixed, by means of two bolts, the double strip boom having a coupling plate to which the rake unit or the rotor unit is fixed.

The essence of the invention, as defined by the features of claim 1, consists in that it has a support frame which surrounds the hull along its external upper edges whereby the external side of the support frame is provided along its entire circumference with rows of anchoring handles in which there are mounted handles designed for the connector and the servo motor for connection with an adapter of tools for mowing grass, reed and sedges and removing shrubs and woodlots while the adapter of tools for mowing grass, reed and sedges and removing shrubs and woodlots is equipped with a plate element, a tooling module, a drive system element and a coupling element.

The inventions allows using the hovercraft design and, after adequate adaptations, adapting it to carry out protective treatment operations on water and marshy terrain, related to mowing water-soaked grasslands, reed fields, overgrown waterholes, lakes, channels and rivers, to removing small shrubs and woodlots, to gathering and transporting biomass to buffer storage sites and other works. These works aim at removing the excessive succession of plants, bushes and trees and recovering these areas as protected areas for endangered species of birds, animals or plants.

The hovercraft enables proper situation of the tooling modules against the hull: at the front of the hull, on its both sides or at the rear of the hull, and repositioning the coupled tool module against the ground level or water.

The hovercraft is also characterised in that the hull enables mounting lightweight containers for gathering and transporting biomass.

The design according to the invention enables easy detachment of subassemblies and elements fixed to the tooling modules fixed to the mounting system. It is particularly important with regard to the preparation of the vehicle before its road transportation, e.g. by means of gooseneck type truck trailers or conventional trailers. Selected tooling modules can be mounted in an equally easy manner and so the vehicle can be prepared for another operation on water and marshy terrain. The design according to the invention ensures proper mounting of the mounting system elements and, through them, of necessary tool modules. The hovercraft allows moving safely in heavy water and marshy terrain and minimises the adverse effect that the vehicle has on the ground and the environment. For example, the design transport/flight speed is 30 km/h and the protective treatment operating speed is 4-6 km/h.

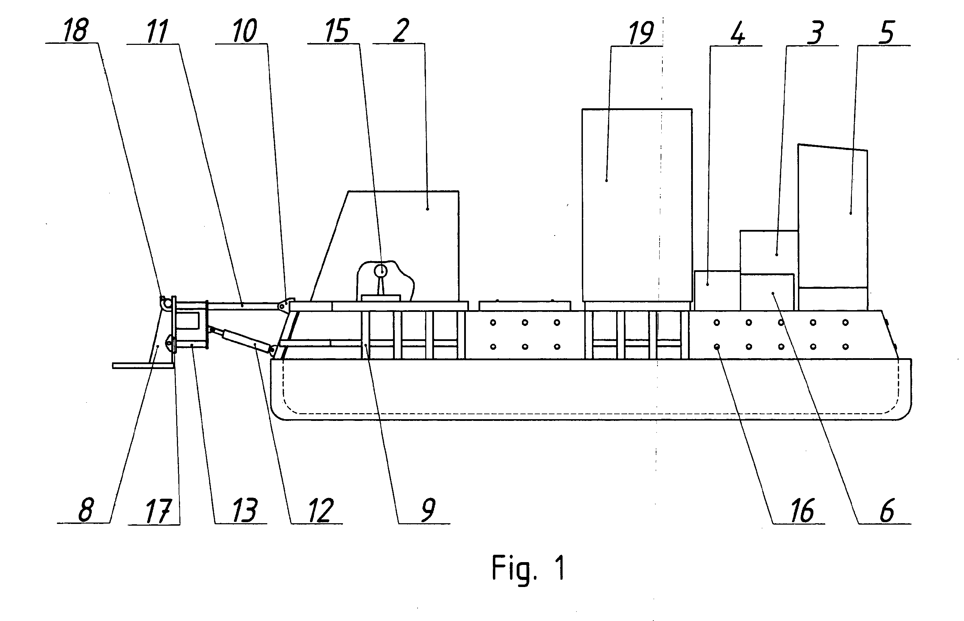

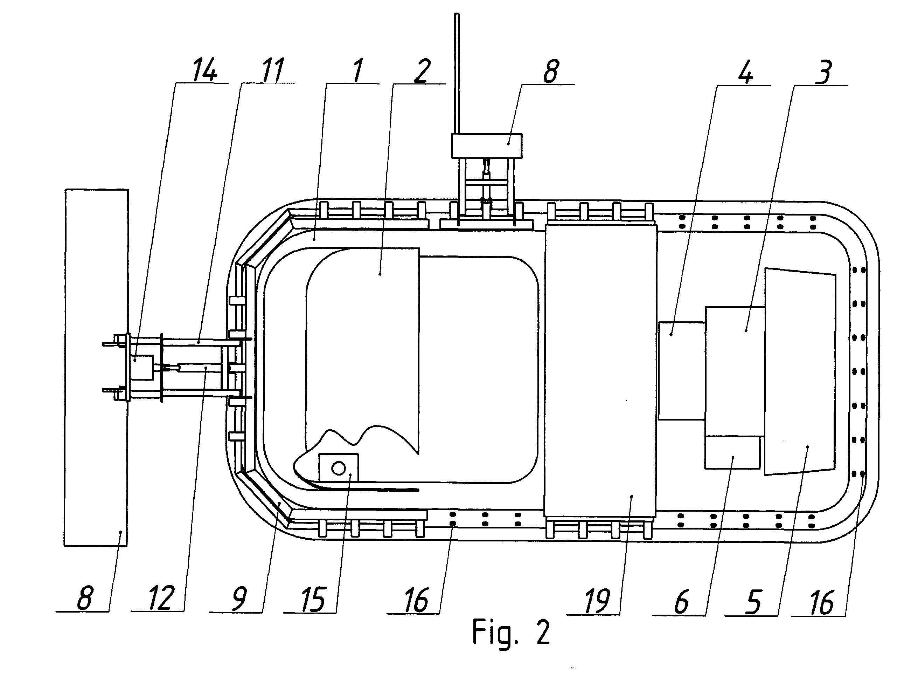

The object of the invention is made visible in the embodiment on the drawing on which fig 1 presents a schematic side view of the hovercraft and fig.2 presents a top view of the hovercraft.

The hovercraft is built of a hull 1 with a cabin 2, a main engine 3, an auxiliary engine 4, a propeller unit 5, an air-cushion generation unit 6 and a tool module 8. The mounting system consists of handles 10, connectors 11, servo motors 12, a tool adapter 13, a drive unit element 14 and a control unit element 15 - is fixed to the anchoring handles 16 of the support frame 9 of the hull 1, it also has plate elements 17 or coupling elements 18 for the attachment of a tooling module 8. The main engine 3 is connected with the propeller unit 5 and additionally with the air-cushion generation unit 6 while the auxiliary engine 4 is connected with an element of the drive system 14 and an element of the control unit 15 for tooling modules 8.

The hovercraft constitutes a hull of a unique design, adapted to be coupled with tooling modules for the purpose of carrying out plant protection treatment operations on water and marshy terrain. A vehicle so designed will enable moving safely and multi-hour operation in heavy terrain conditions, in the period of August and September, that is, after the breeding season of protected bird species. Mounting exchangeable tooling modules will enable mowing grass, reed and sedges, and removing small shrubs and woodlots while adapting the hull to mounting lightweight containers will enable carrying away mowed biomass to buffer storage sites.

The hovercraft according to the invention can serve, after detaching tooling modules, as an off-road vehicle for guard services of national parks and landscape parks and environmental protection inspection authorities. The possibility to travel in such vehicle in hardly accessible terrain will allow better supervision and protection of the natural environment, especially on bird breeding areas.

## Claims

1. Hovercraft designed for carrying out plant protection treatment operations on water and marshy terrain, especially national and landscape parks, consisting of a hull (1) equipped with an air cushion generation unit (6), a main engine (3), a propeller unit (5), an auxiliary engine (4), a cab with a control unit **characterised in that** it has a support frame (9) which surrounds the hull (1) along its external upper edges whereby the external side of the support frame (9) is provided along its entire circumference with rows of anchoring handles (16) in which there are mounted handles (10) designed for the connector (11) and the servo motor (12) for connection with an adapter of tools (13) for mowing grass, reed and sedges and removing shrubs and woodlots while the adapter of tools (13) for mowing grass, reed and sedges and removing shrubs and woodlots is equipped with a plate element (17), a tooling module (8), a drive system element (14) and a coupling element (18).

## Patentansprüche

1. Luftkissenfahrzeug, konzipiert für die Durchführung von Pflanzenschutzoperationen in Wasser , und schlammigen Bereichen, insbesondere in National- oder Landschaftsparks, bestehend aus einem Rumpf 1, ausgerüstet mit einer Luftkissen erzeugenden Einheit 6, einem Hauptmotor 3, einer Propellereinheit 5, einem Hilfsmotor 4, einer Kabine mit Steuereinheit, **dadurch gekennzeichnet, dass** es einen Stützrahmen 9 aufweist, der den Rumpf 1 entlang seiner äußeren Oberkanten umgibt, wobei die äußere Seite des Stützrahmens 9 entlang ihres gesamten Umfangs mit Reihen von Verankerungsgriffen 16 versehen ist, in welchen Griffe 10 montiert sind, die für das Anschlußstück 11 und den Servomotor 12 für die Verbindung mit einem Anpassungsstück für Werkzeuge 13 zum Mähen von Gras, Schilf und Riedgräsern und Entfernen von Sträuchern und Gehölzen ausgelegt sind, wobei das Anpassungsstück für Werkzeuge 13 zum Mähen von Gras, Schilf und Riedgräsern und Entfernen von Sträuchern und Gehölzen mit einem Plattenelement 17, einem Werkzeugbereitstellungsmodul 8, einem Antriebssystemelement 14 und einem Kupplungselement 18 ausgerüstet ist.

## Revendications

1. Aéroglisseur conçu pour réaliser des opérations de préservation des plantes sur des zone aquatiques et bouseuses, en particulier dans des parcs de paysages naturels et nationaux, constitué d'une coque 1 équipée d'une unité de génération de coussin d'air (6), un moteur principal 3, une unité de propulsion 5, un moteur auxiliaire 4, une cabine avec une unité de commande **caractérisée en ce qu'**elle présente un cadre de support 9 qui entoure la coque 1 le long de ses bords supérieurs externes, de sorte que le côté externe du cadre de support 9 est prévu sur toute sa circonférence avec des rangées des poignées d'ancrage 16 oů des poignées 10 sont montées qui sont conçues pour le connecteur 11 et le servomoteur 12 pour connexion avec un adaptateur d'outils 13 pour tondre d'herbe, des roseaux et des carex et pour enlever des arbustes et des parcelles boisées, alors que l'adaptateur d'outils pour tondre d'herbe, des roseaux et des carex et pour enlever des arbustes et des parcelles boisées est équipé d'un élément de plaque 17, un module d'outillage 8, un élément de système d'entraînement 14 et un élément de couplage 18.
